# EUROPÄISCHE PATENTANMELDUNG

(11) **EP 4 442 105 A1**
(43) Veröffentlichungstag der Anmeldung: **09.10.2024**
(21) Anmeldenummer: 24157719.6
(22) Anmeldetag: 15.02.2024
(51) Int. Cl.: A01D 84/00

(54) **QUERFÖRDERER FÜR EINEN SCHWADER UND SCHWADER MIT QUERFÖRDERER**

(30) Priorität: 06.04.2023 IT 202300001455 U
(71) Anmelder: Schlosserei Stockner S.r.l., 39040 Naz-Sciaves (BZ) (IT)
(72) Erfinder: STOCKNER, Helmut, 39040 Naz-Sciaves (BZ) (IT)
(74) Vertreter: Becker, Eberhard

(57) **Zusammenfassung**

Querförderer (2) für Schwader (64), der mit mit einer Aufnahmevorrichtung (70) ausgestattet ist, wobei der Querförderer (2) umfasst: mindestens zwei Bandrollen, Riemenscheiben, oder Kettenräder; einen Riemen, Band, Schiene, oder Kette (16), die zwischen den Bandrollen, Riemenscheiben, oder Kettenrädern (10) erstreckt, um durch die Drehung der genannten in Bewegung gesetzt zu werden; Förderzinken (20), Federzinken (22), Dreieckszinken (24) und/oder Transportleisten (26), die an dem Band (12), Riemen (14), Schiene, oder Kette (16) angeordnet sind; einen Antrieb (4); und eine Halterung (38), die eingerichtet ist, den Querförderer (2) so an dem Schwader (64) anzubringen, sodass der Querförderer (2) vertikal oder nach der Aufnahmevorrichtung (70) des Schwaders (60) angeordnet ist, und wobei der Querförderer (2) geeignet ist, das vom Schwader (60) gesammelte Material quer zur Fahrtrichtung des Schwaders mit nach unten gerichteten Zinken (20) oder Stangen (26) zu fördern.

## Beschreibung

### [TECHNISCHES GEBIET]

Die vorliegende Erfindung betrifft ein Zusatzgerät in Form eines Querförderers für einen Schwader, insbesondere einen Bandschwader. Die vorliegende Erfindung betrifft auch einen Schwader mit dem Zusatzgerät als Anbau- oder als Vorsatzgerät sowie einen selbstfahrenden, manuell geführten, oder autonom fahrenden angetriebenen Schwader, der mit dem Zusatzgerät ausgestattet ist.

### [STAND DER TECHNIK]

Es sind bereits viele unterschiedliche Technologien bekannt, wie Heu auf einem Feld zu Schwaden zusammengeschoben oder zusammengeworfen werden können. Ähnlich dem Schwader hat sich der Heuwender bewährt, der auf einem Feld oder einer Wiese liegendes Heu aufwirft und umdreht, um das Trockenen des geschnittenen Grases zu beschleunigen. Ein Schwader führt geschnittenes Heu nach der Mahd und dem Trocken zu Schwaden zusammen, d. h. reihenförmig zusammengerechtes bzw. abgelegtes Gras, Heu oder Getreide. Es können auch andere Feldfrüchte geschwadert werden. Diese Schwaden werden mittels Ballenpressen, Feldhäckslern oder Ladewagen aufgenommen und abtransportiert oder zerkleinert.

Es gibt zur Zeit eine sehr große Vielfalt von Schwadern, die je nach Anwendungszweck und Einsatzort sowie zur Verfügung stehenden Traktoren, Geräteträgern oder Einachsschleppern verschiedenartig ausgeführt sind.

Daher sind momentan Kreiselschwader (oder Rotorschwader), Sternradschwader (oder Leerlauf- oder Spinnenschwader), Kammschwader, Bandschwader (oder Endloskette-Bandrechen-schwader), und Pick-Up-Schwader, wie auch als Pick-Up-Bandschwader, bekannt.

### [KURZDARSTELLUNG DER ERFINDUNG]

### [TECHNISCHES PROBLEM]

Es ist bei Schwadern wünschenswert, ein sicheres Transportieren und Ablegen von Material auf einer Schwade oder Heumad zu gewährleisten. Es ist insbesondere wünschenswert, auch bei Schwadern, die an Hängen eingesetzt werden, aufgenommenes Material sicher zu transportieren und abzulegen. Es ist weiterhin wünschenswert Hangschwadern zu ermöglichen, die quer zu einem Hang bewegt werden, eine Schwade an der Hangseite sicher abzulegen.

Prinzipiell ist die vorliegende Erfindung daher auf einen Schwader gerichtet, der quer zu einem Hang bewegt wird, und dem ermöglicht wird, eine Schwade sicher auf der Hangseite zu bilden. Bei Pick-Up-Bandschwadern bestand bisher gerade bei großen Hangneigungen und großen Material bzw. Heumengen die Gefahr, dass sich das Material auf dem Band zusammendreht bzw. zusammenrollt und von dem Band in Talrichtung abrollt. Dieses Problem tritt nicht auf, wenn eine talseitige Schwade gebildet wird, was jedoch je nach Topografie, wie talgseitigem Bewuchs oder talseitigen Abbruchkanten nicht möglich oder zumindest nicht erwünscht ist.

### [LÖSUNG DES PROBLEMS]

Gemäß einer ersten Ausführungsform der vorliegenden Erfindung wird ein Querförderer mit den Merkmalen des vorliegenden Anspruchs 1, ein Schwader mit einem Querförderer mit den Merkmalen des vorliegenden Anspruchs 8 oder 9 bereitgestellt, wobei bevorzugte Ausführungsformen jeweils in den abhängigen Ansprüchen angegeben sind.

Gemäß einem ersten Aspekt der vorliegenden Erfindung wird ein Querförderer für einen Schwader mit einer Aufnahmevorrichtung, wie beispielsweise einen Pick-Up Schwader oder einen Pickup-Bandschwader bereitgestellt. Der Querförderer kann in einer Grundausführung als Anbaugerät für einen bereits vorhanden Schwader, ein Schwader-Vorsatzgerät, vorzugweise einen Pick-Up Schwader dienen. Bei anderen Ausführungsform wird der Schwader mit montiertem Querförderer oder dem Querförderer als integralen Bestandteil des Schwaders hergestellt und/oder vertrieben. Der Querförderer umfasst mindestens zwei Bandrollen, Riemenscheiben oder Kettenräder, die jeweils seitlich angeordnet sind. Die Bandrollen, die Riemenscheiben oder die Kettenräder sind eingerichtet, um jeweils mindestens ein Band, einen Riemen, eine Schiene oder einer Kette aufzunehmen, das bzw. die sich zwischen den Bandrollen, den Riemenscheiben oder den Kettenrädern erstrecken, um durch die Drehung der Rollen, Riemenscheiben oder Kettenräder in Bewegung gesetzt zu werden. Nach der Montage am Schwader verläuft das Band, die Schiene, der Riemen oder die Kette im Wesentlichen parallel zum Schwaderband und quer zu einer Fahrrichtung des Schwaders. An dem Band, dem Riemen, der Schiene, oder der Kette sind Förderzinken, Federzinken, Dreieckszinken oder Transportleisten angeordnet, die eingerichtet sind, um aufgenommenes Material quer zu einer Fahrtrichtung des Schwaders, an dem der Querförderer angebracht ist, zu fördern und neben dem Schwader abzulegen. Im Falle eines Bandschwaders soll der Querförderer mit dem Band zusammenwirken. Der Querförderer weist einen Antrieb auf, der auf mindestens eine Bandrolle, eine Riemenscheibe, ein Kettenrad, das Band, den Riemen, die Schiene, oder die Kette wirkt. Weiterhin ist der Querförderer mit einer Halterung versehen, die eingerichtet ist, um den Querförderer so an dem Schwader anzubringen, sodass der Querförderer oberhalb (vertikal oder nach) der Aufnahmevorrichtung des Schwaders angeordnet ist. Der Querförderer ist weiter so eingerichtet, um von dem Schwader aufgenommenes Material mit den jeweils nach unten weisenden Förderzinken, Federzinken, Dreieckszinken oder Transportleisten quer zu einer Fahrtrichtung des Schwaders zu fördern und neben dem Schwader auszuwerfen oder abzulegen. Der Querförderer ist dabei so ausgeführt, dass er entweder aufgenommenes Material über eine glatte (oder geriffelte) Fläche des Schwaders schiebt, oder mit einem Fördermechanismus ausgestattet ist, der der Aufnahmevorrichtung des Schwaders nachgeschaltet ist, und mit ihr zusammenwirkt und so aufgenommenes Material gemeinsam mit dem Fördermechanismus quer zu einer Fahrrichtung des Schwaders transportiert und ablegt.

Bei einer weiteren beispielhaften erfindungsgemäßen Ausführungsform des Querförderers weist die Halterung mindestens ein Gelenk auf, um eine Höhenverstellung des Querförderers in Bezug auf den Schwader zu ermöglichen. Das Gelenk soll dabei insbesondere eine Höhenverstellung in Bezug auf die Aufnahmevorrichtung des Schwaders gestatten, um den Querförderer an eine Menge aufgenommenen Materials anzupassen, sodass das geförderte Material zwar unter dem Querförderer gegriffen, aber nicht eingeklemmt wird. Hierdurch kann die Transportkapazität des Querförderers an wechselnde Mengen aufgenommenen Materials angepasst werden. In einer bevorzugten Ausführungsform ist eine Höhenverstellung vorgesehen oder weist einen Gewichtsausgleich auf, so dass mittels Gegengewichten oder mittels Vorspannfedern eine bestimmte Kraft eingestellt werden kann, die notwendig ist, um den Querförderer anzuheben. Dadurch kann der Querförderer leicht verstellt werden und an die Menge aufgenommenen Materials wie Gras, Heu oder Feldfrüchten angepasst werden.

Bei einer weiteren erfindungsgemäßen Ausführungsform des Querförderers ist dieser weiter mit einem Leitblech und/oder einem Rollenniederhalter und/oder einem oberen Pick-Up, vorzugweise einem Stachelrotor, versehen. Ein Leitblech kann die Funktion des Pick-Ups verbessern; weiterhin gestattet eine gebogenes Leitblech (z. B., mit dem Teil, der den Boden berührt, wie eine Kufe) ein Anheben des Querförderers in Bezug auf eine obere Fläche des Schwaders, zum Bespiel des Pickups oder eines Förderbandes eines Pickup-Bandförderers, um unterschiedlich große Mengen an aufgenommenem Material fördern zu können. Anstelle des Leitblechs kann auch hier der Rollenniederhalter und/oder der obere Pickup bzw. der Stachelrotor dazu dienen, eine Höhenverstellung des Querförderers in Bezug auf den Schwader einzustellen. Je nach Konstruktion und bei Verwendung von Vorspannfedern wie beispielsweise Spiralfedern, Gasdruckfedern, Hydraulikfedern oder auch Gegengewichten kann eine Menge des aufgenommenen Materials ausreichend sein, um den Querförderer so weit anzuheben, dass auch größere und kleinere Materialmengen gleichmäßig zur Seite gefördert werden können. Bei Verwendung eines oberen Pick-Up zusammen mit dem Querförderer an einem Pick-Up-Bandschwader kann ein Abstand zwischen dem oberen Pickup des Querförderers und unteren Pickup des Schwaders durch eine Menge aufgenommenen Heus bzw. einer angefahrenen Heuschwade bestimmt werden. Eine Höhenverstellung kann auch durch ein Leitblech oder einen Rollenniederhalter unterstützt werden. Zur Verbesserung der Funktion ist es ebenfalls vorgesehen, einen Rollenniederhalter durch einen eigenen Motor anzutreiben, wobei eine Drehzahl des Rollenniederhalters bevorzugt an eine Vortriebsgeschwindigkeit des Schwader angepasst ist. Es kann ebenfalls vorgesehen sein, den Rollenniederhalter mit einer höheren Drehzahl als eine Fahrgeschwindigkeit des Schwaders anzutreiben, um sicherzustellen, dass der Rollenniederhalter auch auf höhere Heuhaufen fahren kann, ohne dass eine Gefahr besteht, diese nur wegzuschieben. Durch einen angetriebenen Rollenniederhalter kann die Höhe des Querförderers in Bezug auf die Aufnahmevorrichtung automatisch angepasst werden, ohne dass eine gesonderte Verstellung notwendig ist.

Bei einer zusätzlichen Ausführungsform des Querförderers ist das Band oder die Schiene als ein Mehrfachband; der Riemen als Keilriemen, Zahnrieben, Mehrfach-Keilriemen oder Mehrfach-Zahnrieben; und/oder die Kette als eine Mehrfachkette, ausgeführt. Bei Mehrfachbändern sollten auch mehrere Bandrollen oder Mehrfach-Bandrollen verwendet werden. Bei mehrfach-Keilriemen oder Mehrfach-Zahnrieben, sind mehrere Keilriemenscheiben oder Mehrfach-Keilriemenscheiben bzw. Mehrere Zahnriemenscheiben bzw. Mehrfach-Zahnriemenscheiben zu verwenden. Bei Mehrfachketten müssen mehrere Kettenräder oder Mehrfachkettenräder zum Einsatz kommen. Bei Mehrfachbändern, Mehrfachriemen oder Mehrfachketten ist es ebenfalls möglich Stege oder Brücken zu verwenden, die jeweils zwei oder mehr Bänder, Riemen, Schiene, oder Ketten miteinander verbinden. Stege oder Brücken können dazu dienen weitere Zinken anzubringen, die nicht direkt über einer Kette, einer Schiene, einem Band oder Riemen befestigt sind. Kettenantriebe werden hier vermutlich nicht in Form von klassischen Rundgliederketten, sondern eher in der Form von Rollenketten oder Raupenketten aus Metall oder Kunststoff umgesetzt werden. Es ist ebenfalls möglich, Scharnierketten aus Kunststoff oder Bandketten aus Gummi für den Querförderer zu verwenden, um die Förderzinken, Federzinken, Dreieckszinken, und/oder Transportleisten zu tragen.

Bei einer weiteren Ausführungsform des Querförderers wird dieser durch einen Motor angetrieben. Der Querförderer wird insbesondere durch einen Motor eines Schwaders mittels einer Zapfwelle angetrieben, wobei der Motor eines Schwaders eigentlich nicht Teil des Querförderer ist. Es ist ebenfalls möglich, den Antrieb des Querförderers durch eine Zapfwelle von einem Traktor oder Schlepper zu verwirklichen. Es ist vorgesehen, dass der Antrieb des Querförderers durch einen Hydraulikmotor verwirklicht ist, der von einer Hydraulikpumpe oder einem Generator des Schwaders, einer Zapfwelle von einem Traktor oder Schlepper, oder von einer Hydraulikquelle eines Traktors oder Schleppers angetrieben wird. Es ist ebenso vorgesehen, den Querförderer durch einen Elektromotor anzutreiben, der von einem Generator des Schwaders, von einem mit einer Zapfwelle von einem Traktor oder Schlepper angetriebenen Generator, oder von einer Spannungsversorgung eines Traktors, oder Schleppers, versorgt wird.

Bei einer anderen Ausführungsform des Querförderers weisen die Förderzinken, Federzinken, Dreieckszinken und/oder Transportleisten eine Verstellung auf, die eine Ausrichtung der Förderzinken, Federzinken, Dreieckszinken oder Transportleisten zum Band, zum Riemen, zur Schiene, oder zur Kette verstellen bzw. verändern, während sich die Förderzinken, Federzinken, Dreieckszinken und/oder Transportleisten einmal um die Länge des Bandes, des Riemens, der Schiene, oder der Kette bewegen. Eine solche Verstellung ermöglicht es die Zinken oder die Leisten in Bezug auf das Band, den Riemen, die Schiene, oder die Kette in Längsrichtung oder in Querrichtung zu verstellen. So können zum Beispiel an den Bandrollen, den Riemenscheiben oder den Kettenrädern die Zinken oder die Leisten weiterhin zum Boden zeigen, um zu verhindern, dass aufgenommenes Material zu stark aufgeworfen bzw. nach oben geworfen wird, sondern das Material im Wesentlichen neben dem Schwader abgelegt wird. Die Förderzinken, Federzinken, Dreieckszinken oder Transportleisten weisen dabei eine Verstellung auf wie sie von den verstellbaren Pick-Up-Zinken bekannt ist. Bevorzugt gestattet die Verstellung sich einer Umkehrung einer Laufrichtung des Querförderers anzupassen. Es ist ebenfalls vorgesehen, eine Winkelverstellung der Förderzinken, Federzinken, Dreieckszinken oder Transportleisten vorzunehmen, um durch einen Pick-Up angeworfenes Heu besser zwischen den Zinken oder Transportleisten aufnehmen zu können. Es ist ebenfalls vorgesehen, ein Prallbrett oder ein Prallsegel bzw. einen Prallvorhang in Auswurfrichtung des Schwaders / Querförderers anzubringen, um zu verhindern, dass der Querförderer die Schwade zu weit in Querrichtung verteilt (z.B., zu weit von Schwader).

Bei einer zusätzlichen Ausführung des Querförderers weist dieser weiter mindestens einen seitlichen Abstreifer, vorzugweise ein Abstreifblech auf. Der Abstreifer bzw. das Abstreifblech ist eingerichtet von dem Querförderer gefördertes Material von den Förderzinken, Federzinken, Dreieckszinken oder Transportleisten abzustreifen. Die Abstreifen können gemäß dem mit dem Schwader zu schwadendem Material abgestimmt sein. Es ist mindestens ein Abstreifer vorgesehen, es werden jedoch insbesondere jeweils beidseitig symmetrisch angeordnete Abstreifer vorgesehen, um ein Aufwerfen des von dem Querförderer geförderten Materials zu verhindern und ein Ablegen des Materials zu ermöglichen. Die Abstreifer können im als Abstreifbleche oder Leitbleche ausgeführt werden, die im Wesentlichen einer Bewegung der Zinken folgend das Material von diesen abstreift. Bei verstellbaren Zinken oder Leisten kann der Abstreifer als Blech mit Schlitzen ausgeführt sein, es ist jedoch auch möglich gebogene Bleche zu verwenden, je nach Zinkenform und Bewegung der Zinken im Bereich der Bandrollen, der Riemenscheiben oder der Kettenräder. Die Abstreifer sollen sicherstellen, dass das geförderte Material waagerecht oder nach unten geworfen wird und nicht nach oben geworfen wird, und sich dadurch zu weit verteilt, um eine Schwade zu bilden. Bevorzugt sind die Abstreifer oder Abstreifbleche Verstellbar, um den Querförderer mit dem Schwader auch als Heuwender einsetzen zu können. Es ist ebenfalls vorgesehen, einen Abstreifer zu verwenden, der das geförderte Material schräg nach unten leitet. Bevorzugt ist der Abstreifer auf die Zinkenform und die Zinkenbewegung an den Bandrollen, den Riemenscheiben bzw. den Kettenrädern abgestimmt, um eine Belastung des geförderten Materials nach Möglichkeit zu verhindern.

Gemäß einem zweiten Aspekt der vorliegenden Erfindung wird ein Selbstfahrschwader, autonom selbstfahrend oder manuell geführt, vorzugweise ein Einachs-Schwader, vorzugweise ein Einachs-Hang-Schwader, oder Zweiachs-Schwader, vorzugweise Zweiachs-Hang-Schwader, mit einer Aufnahmevorrichtung, um auf dem Boden liegendes Material, vorzugweise Gras oder Stroh aufzunehmen, bereitgestellt. Der Selbstfahrschwader umfasst einen der vorstehend beschriebenen Querförderer, die eingerichtet sind, aufgenommenes Material zumindest zum Teil zu einer Seite des Selbstfahrschwaders zu transportieren.

Gemäß einem anderen Aspekt der vorliegenden Erfindung wird ein Anbauschwader, vorzugweise ein Vorsatzschwader, mit eine Querförderer bereitgestellt, wie er vorstehend beschrieben wurde. Der Anbauschwader weist dabei eine Aufnahmevorrichtung für auf einem Boden liegendes Material, vorzugweise Gras oder Stroh, auf, wobei das aufgenommene Material dann zumindest zum Teil durch den Querförderer zu einer Seite des Anbauschwaders transportiert wird. Hier kann der Querförderer die einzige Querfördereinrichtung sein, bzw. kann der Anbauschwader auch einen Fördermechanismus umfassen, die der Aufnahmevorrichtung des Schwaders nachgeschaltet ist, wobei der Fördermechanismus und der Querförderer in diesem Fall zusammenwirken und das Material von unten und von oben zusammen zu einer Seite fördern. Durch den Querförderer ist es ebenfalls möglich, das Material auch in steilen Hängen hangaufwärts zu fördern und so zu verhindern, dass eine Schwade an einem Bewuchsrand oder an einer Abbruchkante abgelegt werden muss. Somit gestattet ein solcher Anbauschwader eine größere Freiheit bei der Heuarbeit, als Schwader, die es lediglich gestatten, Heu an der Hangabwärts-Seite zu schwaden.

Bei einer Ausführungsform des Anbauschwaders oder des Selbstfahrschwader umfasst dieser weiter ein Schild oder ein Band, das in Fahrtrichtung hinter der Aufnahmevorrichtung angeordnet ist und das aufgenommene Material zu einer Seite des Schwaders umlenkt oder transportiert. Bei dieser Ausführung kann ein unteres Band vorhanden sein, wie bei einem Pick-Up-Bandschwader. Bei dieser Ausführung kann ebenfalls ein Blech oder ein bewegliches Schild vorhanden sein, das nach links oder rechts geschwenkt werden kann, das aufgenommenes Material zu einer Seite fördert. Der Querförderer ist vorzugsweise auf einem solchen Blech oder Schild angeordnet. Bei dieser Ausführung kann der Querförderer in Verbindung mit der Platte oder dem Schild auch leicht schräg zur Fahrtrichtung geneigt sein, so dass eine Quertransportrichtung erreicht wird, die nicht senkrecht zur Fahrtrichtung des Rechens steht.

Gemäß einer weiteren Ausführungsform des Anbauschwaders, vorzugweise Vorsatzschwaders, wie er vorstehend beschrieben wurde, umfasst der Anbauschwader einen Anschluss für einen Dreipunkt-Kraftheber, ein Schnellkuppeldreieck oder eine andere Schnittstelle zu einem Einachstraktor oder einem Einachsschlepper, einem Mehrachstraktor oder einem Mehrachsschlepper, oder einem Hanggeräteträger. Die andere Schnittstelle kann einen mechanischen Anschluss zum Ein- oder Zweiachs-traktor bzw. -schlepper bereitstellen sowie einen Versorgungsanschluss für mechanische und/oder hydraulische und/oder elektrische Energie bereitstellen.

### [KURZE BESCHREIBUNG DER ZEICHNUNGEN]

Die Merkmale und Vorteile der vorliegenden Erfindung ergeben sich aus der nachfolgenden detaillierten Beschreibung der in den beigefügten Zeichnungen dargestellten Ausführungsformen:
Figuren 1A bis 1F zeigen einen erfindungsgemäßen Schwader als zusammengebauten Schwader oder als vormontierten Schwader, der mit einem erfindungsgemäßen Querförderer ausgestattet ist.
Figur 2A stellt eine schematische Seitenansicht einer anderen Ausführungsform eines erfindungsgemäßen Schwaders mit einen Querförderer dar.
Figuren 2B bis 2E zeigen verschiedene Ansichten des erfindungsgemäßen Querförderers von Figur 2A.
Figuren 3A bis 3D stellen eine weitere Ausführungsform eines erfindungsgemäßen Querförderers dar.
Figuren 4A bis 4C zeigen Fahrzeuge mit montiertem Schwader mit Querförderer.

### [BESCHREIBUNG DER AUSFÜHRUNGSFORMEN]

Im Folgenden werden sowohl in den Figuren als auch in der Beschreibung gleiche oder ähnliche Bezugszeichen verwendet, um auf gleiche oder ähnliche Elemente und Komponenten Bezug zu nehmen.

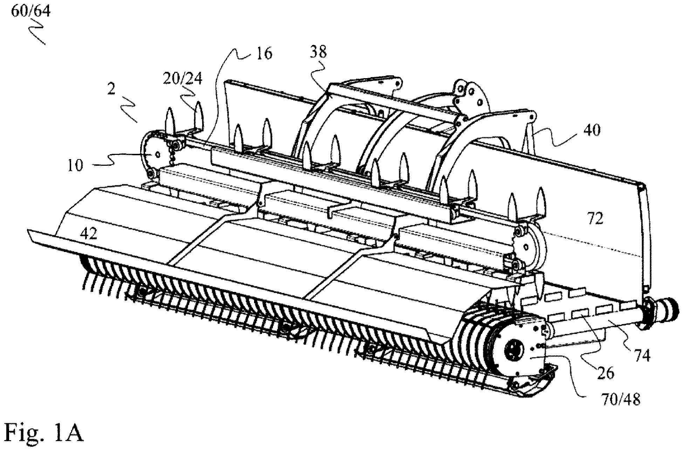

Figur 1A zeigt einen Vorsatz-Bandschwader mit einem zusätzlichem Querförderer. Die Figur zeigt somit einerseits einen kompletten Schwader 60 als auch den Querförderer an dem Schwader 64 angebracht ist. Der Schwader 60 ist als Pickup-Bandschwader ausgeführt. Der Schwader 60 der Figur 1A ist mit der Aufnahmevorrichtung 70 eingerichtet, die als Pickup 48 ausgeführt ist und ein Band bzw. Förderband 74 aufweist. Der Schwader 60 nimmt mit der Aufnahmevorrichtung 70 Gras, Heu oder ähnliches Material auf. Das gesamte Material wird von der Aufnahmevorrichtung 70 nach hinten auf den Schwader geworfen. Das aufgeworfene Gras, Heu oder ähnliches Material landet entweder direkt auf dem Förderband 74 oder nachdem es von dem Schild 72 abgeprallt ist. Das Förderband 74 fördert das Gras, Heu oder ähnliches Material zur Seite und legt es neben der Schwader 60 ab. Das Förderband 74 ist mit Transportleisten 26 versehen. Dem Pickup 48 liegt ein Leitblech 42 gegenüber, das mit der Aufnahmevorrichtung 70 zusammenwirkt. Bei einem Einsatz in der Waagerechten wird sämtliches Material, das von der Aufnahmevorrichtung 70 des Schwaders aufgenommen wird durch das Förderband 74 zur Seite befördert und neben dem Schwader 60 abgelegt. Im Falle von großen Gras-, Heu- oder Materialmengen können Probleme auftreten, wobei nur ein unterer Teil des aufgenommenen Materials gefördert wird, dabei kann es zu einem Förderstau kommen. In diesem Fall türmt sich Material auf dem Förderband immer weiter auf, und ein oberer Teil des aufgenommenen Materials kann nicht zur Seite transportiert werden. Auch im Fall eines Einsatzes des Schwaders quer an einem Hang passiert es, dass das Förderband 74 Gras, Heu oder sonstiges Material nicht Hangaufwärts befördern kann, weil sich das Material so weit auftürmt, bis es hangabwärts vom Förderband 74 abrollt. Bei dem vorliegenden erfindungsgemäßen Schwader kann dies nicht passieren, Gras, Heu oder sonstiges Material auf jeden Fall in der gewünschten Richtung gefördert wird, da das Material zwischen dem unteren Förderband 74 und dem oberen Querförderer 2 gegriffen wird. Der Querförderer 2 ist mittels einer Halterung 38 an dem Schwader 64 befestigt. Die Halterung 38 ist mit einem Hydraulikzylinder, einer Gasdruckfeder, einer Feder oder einem Gegengewicht als Höhenverstellung versehen, um es zu ermöglichen, dass ein Abstand zwischen dem Förderband 74 und Querförderer 2 eingestellt werden kann, um den Schwader an unterschiedliche Gras-, Stroh- oder Materialmengen anpassen zu können. Bei richtiger Einstellung kann das Leitblech 42, das mit der Aufnahmevorrichtung 70 des Schwaders 60 zusammenwirkt dazu dienen die Arbeitshöhe des Querförderers 2 gegenüber dem Förderband 74 automatisch zu verstellen.

Der Querförderer 2 der Figur 1A ist als Querförderer mit einer Förderkette 16 versehen, die auf zwei Kettenrädern 10 läuft und von einer Kettenführung geführt wird. Auf der Förderkette 16 des Querförderers sind Förderzinken 20 angeordnet. Die Förderzinken sind als Doppelzinken mit zwei Dreieckszinken 24 ausgeführt. Die gebogene polygonale Form der Dreieckszinken 24 weist den Vorteil auf, dass ein Abstreifer nicht notwendig ist, da das geförderte Material an den Umkehrpunkt der Kette nicht nach oben geworfen wird, sondern an der Zinke nach unten abrutscht.

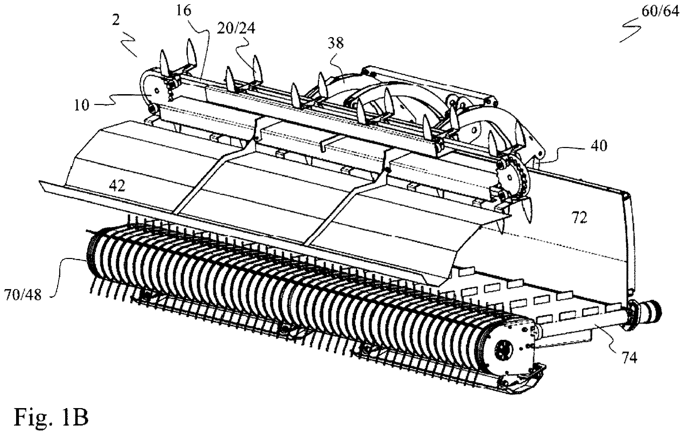

Figur 1B entspricht der Ausführungsform der Figur 1A, wobei der Querförderer 2 durch die Hebevorrichtung 40 angehoben ist und sich nun in einer angehobenen Position befindet. Alle Bezugszeichen sind identisch mit der Figur 1A, weshalb auf eine Wiederholung des Textes verzichtet wird. Im Gegensatz zu der Darstellung der Figur 1A ist der Querförderer in der Figur 1B in einer angehobenen Position dargestellt, wie es im Fall von einer erhöhten Gras- / Heuaufnehme zu erwarten ist. Das Leitblech 42 hebt sich dabei zuerst an, und drückt dann die gesamte Halterung 38 hoch. Ein Hydraulikzylinder dient dabei als Höhenverstellung 40 oder wirkt als Kraftausglich, und nimmt einen Großteil des Gewichts des Querförderers 2 auf. Der Kraftausgleich ermöglicht eine Höhenverstellung durch aufgenommenes Material, das durch den Pickup 48 gegen das Leitblech 42 gedrückt wird.

Die Figuren 1A und 1B wurden eingefügt, um die Funktion des Querförderers 2 zusammen mit einem Schwader 64 darzustellen. Eine Darstellung lediglich eines Querförderers 2 ohne einen dazugehörigen Schwader würde das Verständnis der vorliegenden Erfindung erschweren.

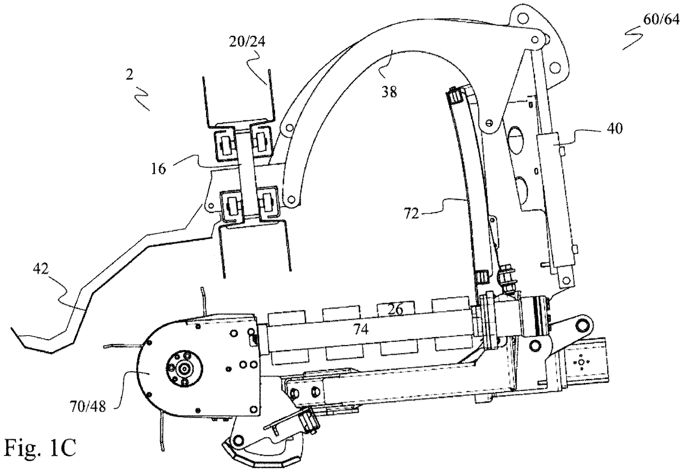

Die Figur 1C stellt eine Teil-Schnittansicht des Schwaders der Figuren 1A und 1B dar. Hier ist der Querförderer 2 in einer Schnittansicht dargestellt, während der Schwader und insbesondere der Pickup 48, der als Stachelrotor ausgeführt ist, und das Förderband 74 des Schwaders in einer Seitenansicht dargestellt sind. Der Stachelrotor wird wie das Förderband 74 angetrieben. Die Halterung 38 bildet fast Parallelogramm-Stabgetriebe, und führt die Bewegung des Querförderers 2. Alle weiteren Komponenten sind mit Bezug auf Figur 1A beschrieben.

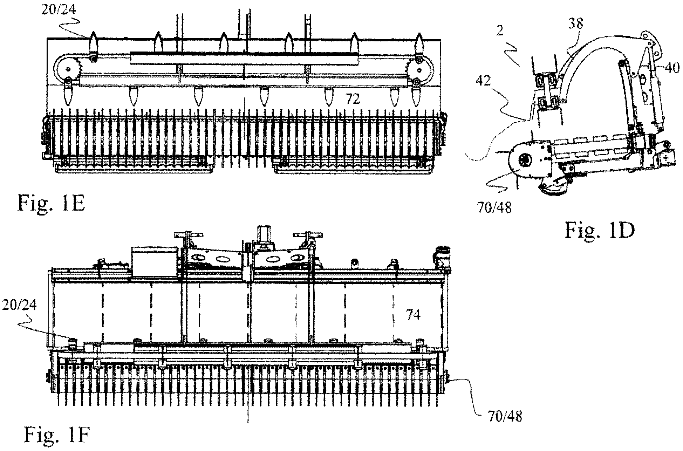

Figuren 1D bis 1F zeigen eine Dreiseiten-Ansicht des Schwaders mit Querförderer 2 der Figuren 1A bis 1C. Figur 1D entspricht dabei im Wesentlichen der Figur 1C, einer Seitenansicht des Schwaders mit Querförderer. In der Figur 1E ist eine Frontansicht des Schwaders mit Querförderer 2 dargestellt, wobei zur besseren Übersichtlichkeit das Leitblech 42 nicht dargestellt ist. In der Figur 1F stellt eine Aufsicht des Schwaders mit Querförderer dar, wobei zur besseren Übersichtlichkeit das Leitblech 42 nicht dargestellt wurde. Bei vollständig angehobener Halterung 38 befindet sich der Querförderer 2 im Wesentlichen oberhalb des Förderbandes 74.

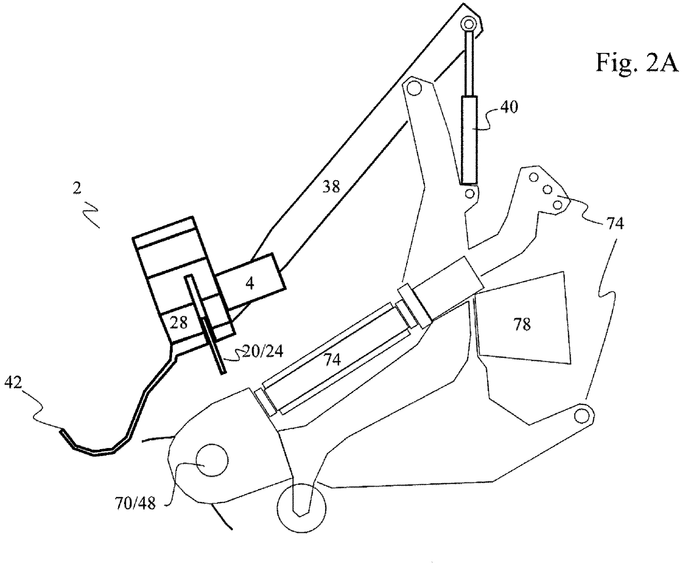

Figur 2A stellt eine schematische Seitenansicht einer anderen Ausführungsform eines Schwaders mit einen erfindungsgemäßen Querförderer 2 dar. Hier ist der Querförderer 2 weiter vorne an dem Schwader angebracht. Weiter ist die Halterung 38 lediglich mit einer Höhenverstellung 40 versehen, die eine Schwenkbewegung des Querförderers 2 in Bezug auf den Schwader bzw. das Förderband 74 des Schwaders gestattet. Der Motor 4 des Querförderers 2 wird bevorzugt als Hydraulikmotor ausgeführt, wobei es ebenfalls möglich ist, einen Elektromotor, einen Pneumatikmotor oder eine direkte mechanische Verbindung zu einer Zapfwelle bzw. einen Zapfwellenanschluss 78 des Schwaders wie einer Elastikwelle vorzusehen. Auch hier ist der Querförderer mit einem Leitblech 42 versehen, das mit der als Pickup 48 ausgeführten Aufnahmevorrichtung 70 zusammenwirkt. Sobald Heu, Gras oder sonstiges Material von der Aufnahmevorrichtung 70 aufgenommen wird, wird es hier sowohl von den Zinken 20, die als Dreieckszinken ausgeführt sind, zusammen mit dem Förderband 74 des Schwaders zu einer Seite des Schwaders gefördert, um neben dem Schwader eine Schwade zu bilden. Hier ist es möglich das aufgenommene Material auch an einem steilen Hang hangaufwärts zu befördern. Hier wird das aufgenommene Material in einer Art Dreieck von allen Seiten zwischen dem Pickup 48, dem Förderband 74 und dem Querförderer 2 nach hinten bzw. zur Seite gefördert. In der Figur 2A ist weiter ein Abstreifblech 28 zu erkennen, der das von den Zinken 20/24 des Querförderers 2 transportierte Material abstreift, um die Ablagerung von Material an den Seiten des Querförderers 2 und des Schwaders zu erleichtern.

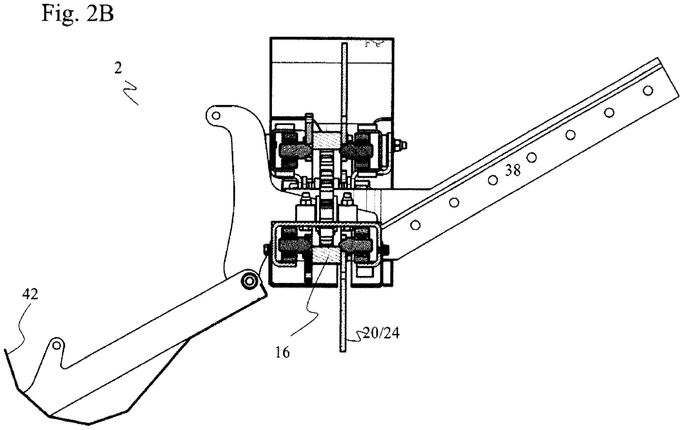

Figuren 2B stellt eine Teil-Schnittansicht des Querförderers 2 von Figur 2A dar, wobei ein Kettenrad 10 eine Kette 16 antreibt. An der Kette 16 sind die Dreieckszinken 24 einreihig angebracht. Die Kette 16 ist zusätzlich an jedem Zinken 20 mit Rollen versehen, die in Schienen bzw. Führungen laufen, um ein verkippen der Zinken beim Fördern zu verhindern. Es ist ebenfalls möglich eine ähnliche Konstruktion auf Grundlage von Zahnriemen zu verwenden.

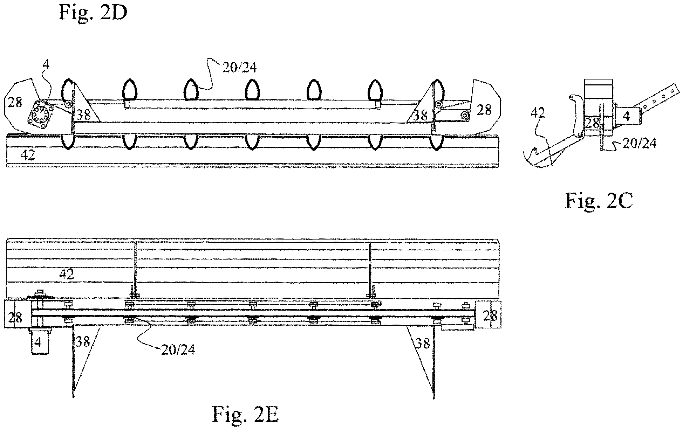

Figuren 2C bis 2E zeigen den Quertransporter 2 den Figuren 2A und 2B aus drei verschiedenen Blickwinkeln. Figur 2C stellt eine Seitenansicht des Querförderers 2 von Figur 2A von rechts dar. Figur 2D stellt eine Ansicht des Querförderers 2 von Figur 2A von hinten dar. Figur 2E stellt eine Aufsicht des Querförderers 2 von Figur 2A . Es wurde für die Figur 2D eine Ansicht von hinten gewählt, da bei einer Frontansicht die untere Reihe and dreieckigen Transportzähnen durch das Leitblech 42 verdeckt wird.

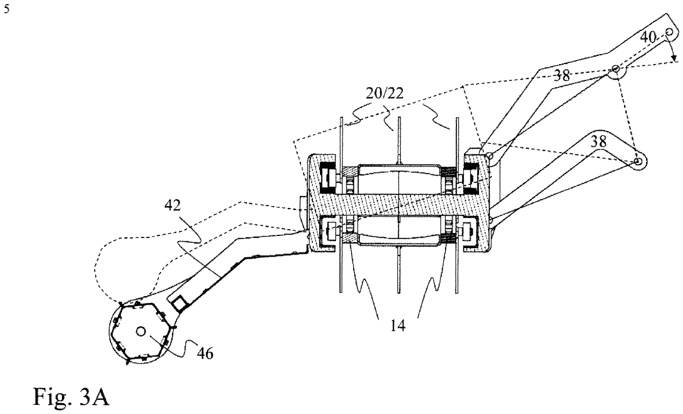

Figuren 3A bis 3D stellen eine weitere Ausführungsform eines erfindungsgemäßen Querförderers dar. In der Figur 3A ist ein Längsschnitt durch einen Querförderer dargestellt, der mit zwei Riemen bzw. einen Doppelzahnriemen 14 versehen ist. Zwischen den jeweils zwei äußeren Zinken 20/22 sind Stege bzw. Brücken angeordnet, die eine mittlere Zinke 20 tragen. Diese Konstruktion gestattet es mit zwei Zahnriemen drei Förderzinken anzutreiben. Es ist auch möglich, ein oder mehrere Querbänder zu verwenden, um die beiden Bänder 14 zu verbinden.

Vorne an dem Querförderer 2 ist ein Rollenniederhalter 46 angebracht, der eine Höhe des Querförderers in Bezug auf eine Aufnahmevorrichtung eines Schwaders steuern kann. Hinter dem Rollenniederhalter 46 ist ein weiteres Leitblech 42 angeordnet, das mit einem Pickup oder einer anderen Aufnahmevorrichtung eines Schwaders zusammenwirken soll. Die Halterung 38 kann sich bewegen und ermöglicht es über ein Stellelement oder ein Gegengewicht bzw. eine Entlastungselement wie eine Zugfeder den Querförderer 2 in der Höhe zu verstellen. Die Halterung 38 bildet ein Viergelenkgetriebe das keine Parallelverschiebung, sondern eine Verschiebung und Drehung des Querförderers 2 um eine Querachse (senkrecht zur Zeichenebene) bewirkt. Dies ist vor allem bei großen Gras-, Heu- oder Materialmengen hilfreich. Die Kinematik der Halterung 38, des Querförderers und des Rollenniederhalters 46 ist durch die Gestrichelten Linien angedeutet, wobei hervorzuheben ist, dass der Querförderer 2 beim Anheben nach vorne gekippt wird. Der Rollenniederhalter 46 kann sich frei drehen. Die Komponente, die den Rollenniederhalter 46 und das Leitblech 42 umfasst, kann in Bezug auf den Querförderer 2 verschwenkt werden. Wie in der Ausführung der Figur 2A ist der Riemen durch einen bzw. mehreren Antrieben angetrieben, die in der Schnittansicht jedoch nicht dargestellt sind.

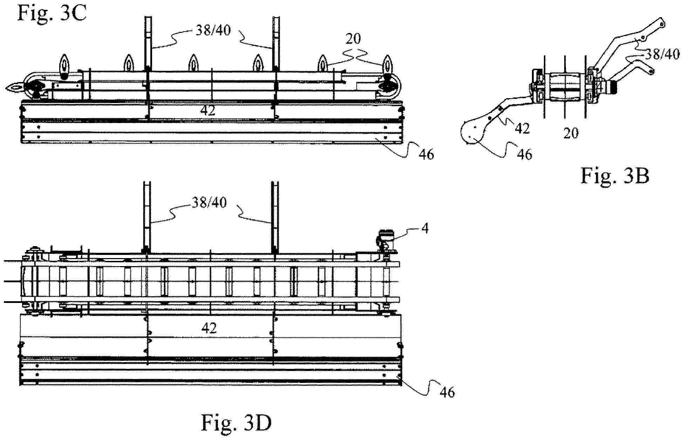

Figuren 3B bis 3D zeigen den Quertransporter 2 der Figure 3A aus drei verschiedenen Blickwinkeln. Figur 3B stellt eine Seitenansicht des Querförderers 2 von Figur 3A in einer Ansicht von einer rechten Seite dar. Figur 3C stellt eine Ansicht des Querförderers 2 von Figur 3A von vorne dar. Im Vergleich zu der Figur 2D sind die Förderzinken durch den Rollenniederhalter 46 verdeckt. Figur 3D stellt eine Aufsicht des Querförderers 2 von Figur 3A dar, wobei eine Fahrrichtung eines Schwaders bei der Figur 3D nach unten gerichtet ist. Hier sind die Brücken/Leisten mit den jeweils drei Zinken zwischen den Antriebsbändern zu erkennen. Durch die Brücken ist es möglich, dass Gras, Heu oder anderes von dem Querförderer gefördertes Material, wenn es durch die Zinken fälschlicherweise auf den Querförderer geworfen wurde, durch die Zwischenräume zwischen den Brücken wieder nach unten fallen kann, von wo es weiter zu einer Seite des Schwaders transportiert wird.

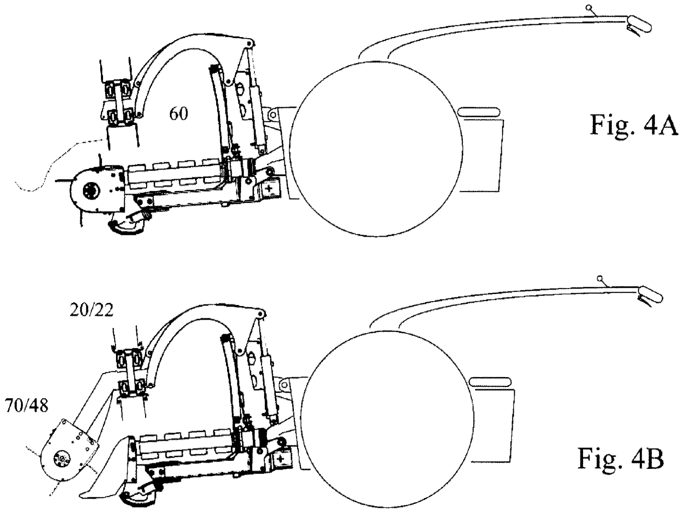

Figuren 4A bis 4C zeigen Fahrzeuge mit montiertem Schwader mit Querförderer.

Figur 4A zeigt den Schwader der Figur 1C wie er an einem nur schematisch dargestellten Einachsschlepper angebracht ist. Der Schwader wird von dem Einachsschlepper geschoben, wobei sich der Schwader durch Kufen unten an dem Schwader abstützt. Die Kufen stellen sicher, dass sich die Aufnahmevorrichtung am Schwader in einer richtigen Höhe über einem Boden befindet. Es ist ebenfalls möglich Gleitteller, Räder oder Rollen einzusetzen. Es ist bevorzugt höhenverstellbare Kufen, Gleitteller, Räder oder Rollen bei Schwadern zu verwenden. Die Funktion des Schwaders wurde in Bezug auf Figur 1A hinreichend beschrieben. Der Schlepper ist als Einachsschlepper ausgeführt und wird über mindestens einen Lenkholm gesteuert, wobei es ebenfalls möglich ist, zur Lenkunterstützung Differentiale, Einzelradkupplungen und oder Einzelradbremsen zu verwenden, um die Steuerung des Einachsschleppers zu vereinfachen.

Figur 4B zeigt einen Einachs-Selbstfahrschwader, bei dem die Aufnahmevorrichtung lediglich aus einem Schild oder einem Rechen gebildet ist. Die Aufnahme von Gras, Heu oder anderem Material wird ein an dem Querförderer befestigter Pickup verwendet. Als weitere Abwandlung werden in der Figur 4B Federzinken 22 anstelle der in Figur 3A bis 3D dargestellten Dreieckszinken als Zinken 20 für den Querförderer 2 verwendet. Bei einem Einsatz als Hangschwader können anstelle von schmalen Traktorreifen Stachelwalzenartige Räder oder Reifen verwendet werden.

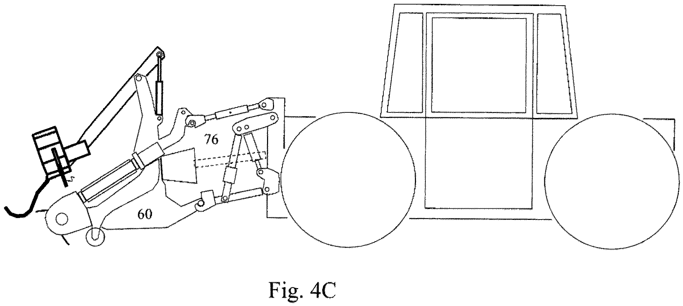

Figur 4C stellt einen Hangschlepper bzw. Traktor mit einem Vorsatz-Schwader dar, der mit einem Dreipunkt-Kraftheber mit dem Geräteträger verbunden ist. Hang-schlepper weisen einen tiefliegenden Schwerpunkt auf, damit sie an einem Hang eher Abrutschen als umkippen und sich überschlagen können. Je nach Interpretation der Figuren 4A bis 4C können die dargestellten Vorrichtungen als vollständige Maschinen oder als Geräteträger mit Vorsatzgeräten betrachtet werden.

Es wird angemerkt, dass nicht alle möglichen Ausführungsformen in den Figuren dargestellt wurden. Es ist beispielweise möglich den Querförderer der Figur 4B mit dem oberen Pickup bzw. der oberen Aufnahmevorrichtung auch mit einem Schwader der Figur 4A zu kombinieren wobei aufgenommenes Gras, Heu oder Material zwischen zwei Pickups gegriffen und transportiert werden kann. Eine Solche Ausführung kann nützlich sein, um beispielsweise verdichtetet Schwaden aufnehmen und umwerfen zu können oder aus größeren Materialanhäufungen einen Teil heraus zu fördern. Die vorliegende Erfindung wird bevorzugt durch eine Wegezapfwelle angetrieben, die direkt mechanisch oder über eine Kombination einer Hydraulikpumpe und einem Hydraulikmotor den Querförderer antreibt. Es kann jedoch auch vorgesehen sein, dass zum Antrieb eine normale Zapfwelle verwendet wird. Es ist vorgesehen eine Geschwindigkeit des Querförderers steuerbar auszuführen, um sie an eine Geschwindigkeit des Transportbandes anpassen zu können. Mit den in den Figuren dargestellten Ausführungsformen sollen auch alle Kombinationen einzelner Komponenten als offenbart angesehen werden die sich aus verschiedenen Kombinationen von Komponenten verschiedener Ausführungsformen kombinieren lassen.

### Bezugszeichenliste

- 2: Querförderer
- 4: Antrieb
- 10: Kettenrad
- 16: Kette
- 20: Förderzinken
- 22: Federzinken
- 24: Dreieckszinken
- 26: Transportleisten
- 28: Abstreifer / Abstreifblech
- 38: Halterung
- 40: Höhenverstellung
- 42: Leitblech
- 46: Rollenniederhalter
- 48: Pickup
- 60: Schwader mit Querförderer
- 64: Pick-Up-Bandschwader
- 70: Aufnahmevorrichtung,
- 72: Schild
- 74: Band / Förderband
- 76: Anschluss für einen Dreipunkt-Kraftheber

## Patentansprüche

1. Querförderer (2) für einen Schwader (60) mit einer Aufnahmevorrichtung (70), wie vorzugsweise einen Pick-Up Schwader oder einen Pickup-Bandschwader (64), wobei der der Querförderer (2) umfasst:
mindestens zwei Bandrollen (6), oder Riemenscheiben (8) oder Kettenräder (10), die jeweils seitlich zueinander angeordnet sind;
einen Riemen (14), ein Band (12), eine Schiene, oder eine Kette (16), das, der, oder die zwischen den Bandrollen (6), den Riemenscheiben (8) oder den Kettenrädern (10) erstrecken, um durch die Drehung der Bandrollen, der Riemenscheiben oder der Ketternräder in Bewegung gesetzt zu werden;
Förderzinken (20), Federzinken (22), Dreieckszinken (24) und/oder Transportleisten (26), die an dem Band (12), dem Riemen (14), der Schiene, oder der Kette (16) angeordnet sind,
einen Antrieb (4), der geeignet ist, die Bewegung der Bandrollen, Riemenscheiben, Ketternräder und/oder des Riemens, der Schiene, des Bands oder der Kette zu aktivieren; und
eine Halterung (38), die eingerichtet ist, den Querförderer (2) so an dem Schwader (64) anzubringen, sodass der Querförderer (2) oberhalb, insbesondere vertikal oder nach der Aufnahmevorrichtung (70) des Schwaders (60) angeordnet ist, und eine Bewegungsrichtung des Bandes, des Riemens, der Schiene oder der Kette im Wesentlichen horizontal und quer zur Bewegungsrichtung des Schwaders verläuft;
wobei der Querförderer (2) geeignet ist, das von der Aufnahmevorrichtung (70) des Schwaders (64) gesammelte Material mit den vorgenannten Transportzinken (20), Federzinken (22), Dreieckszinken (24) und/oder Transportstäben (26) des vorgenannten Bands, des Riemens, der Schiene, oder der Kette (16) nach unten gerichtet (20) zu fördern und neben dem Schwader (64) auszuwerfen oder abzulegen.

2. Querförderer (2) gemäß Anspruch 1, wobei die Halterung (38) mit einem Gelenk versehen ist, das eine Höhenverstellung (40) des Querförderers (2) in Bezug auf den Schwader (60) und insbesondere in Bezug auf die Aufnahmevorrichtung (70) gestattet, wobei bevorzugt die Höhenverstellung (40) angetrieben wird oder mittels Gegengewichten oder Vorspannfedern entlastet wird

3. Querförderer (2) gemäß Anspruch 1 oder 2, wobei der Querförderer (2) weiter mit einem Leitblech (42) und/oder einem Rollenniederhalter (45) und/oder einem oberen Pickup (48) versehen ist, wobei der obere Pickup (48) vorzugsweise als Stachelrotor ausgeführt ist.

4. Querförderer (2) gemäß einem der vorstehenden Ansprüche, wobei, wenn das Band oder die Schiene enthalten ist, das Band oder die Schiene (12) als ein Mehrfachband ausgeführt ist, wobei, wenn der Riemen enthalten ist, der Riemen (14) als Keilriemen, Zahnrieben, mehrfach-Keilriemen oder Mehrfach-Zahnrieben ausgeführt ist, und wobei, wenn die Kette enthalten ist, die Kette (16) als eine Mehrfachkette ausgeführt ist.

5. Querförderer (2) gemäß einem der vorstehenden Ansprüche, wobei der Antrieb (4) des Querförderers (2) einen Motor umfasst, vorzugsweise einen Elektromotor, oder einen Hydraulikmotor, oder einen Verbrennungsmotor.

6. Querförderer (2) gemäß einem der vorstehenden Ansprüche, wobei die Förderzinken (20), Federzinken (22), Dreieckszinken (24) oder Transportleisten (26) eine Verstellung aufweisen, die eine Ausrichtung der Förderzinken (20), Federzinken (22), Dreieckszinken (24) oder Transportleisten (26) zum Band (12), zum Riemen (14), zur Schiene, oder zur Kette (16) verstellen.

7. Querförderer (2) gemäß einem der vorstehenden Ansprüche, wobei der Querförderer (2) weiter mindestens einen seitlichen Abstreifer umfasst, der eingerichtet ist von dem Querförderer (2) gefördertes Material von den Förderzinken (20), Federzinken (22), Dreieckszinken (24) und/oder Transportleisten (26) abzustreifen; bevorzugt ist der Abstreifer als ein Abstreifblech ausgeführt.

8. Selbstfahrsschwader (60), vorzugweise Einachs-Schwader, vorzugweise Einachs-Hang-Schwader, oder Zweiachs-Schwader, vorzugweise Zweiachs-Hang-Schwader, der mit einem Querförderer (2) nach einem der Ansprüche 1 bis 7 ausgestattet ist, wobei der Schwader (64) eine Aufnahmevorrichtung (70) umfasst, um auf dem Boden liegendes Material, vorzugweise Gras oder Stroh, aufzunehmen, und wobei der Querförderer (2) geeignet ist, zumindest ein Teil des aufgessamelten Materials zu einer Seite des Selbstfahrsschwaders (64, 60) zu transportieren.

9. Anbauschwader (60), vorzugweise Vorsatzschwader, der mit einem Querförderer (2) gemäß einem der Ansprüche 1 bis 7 ausgestattet ist, wobei der Anbauschwader (64) eine Aufnahmevorrichtung (70) umfasst, um auf dem Boden liegendes Material, vorzugweise Gras oder Stroh, aufzunehmen, und wobei der Querförderer (2) geeignet ist, zumindest ein Teil des aufgessamelten Material zu einer Seite des Anbauschwaders (64, 60) zu transportieren

10. Selbstfahrsschwader (60) gemäß Anspruch 8 oder Anbauschwader gemäß Anspruch 9, weiter umfassend ein Schild (72) oder ein Band (74), das in Fahrtrichtung hinter der Aufnahmevorrichtung (70) angeordnet ist und das aufgenommene Material zu einer Seite des Anbauschwaders (66) umlenkt oder transportiert.

11. Anbauschwader (60), insbesondere Vorsatzschwader (68), gemäß Anspruch 9 oder 10, wobei der Anbauschwader (60) einen Anschluss für einen Dreipunkt-Kraftheber (76), ein Schnellkuppeldreieck oder eine andere Schnittstelle zur Befestigung des Schwaders (60) an einem Einachsschlepper, einem Traktor, einem Geräteträger, einem Systemschlepper oder einem Hanggeräteträger umfasst, wobei die andere Schnittstelle einen mechanisches Anschluss zum Ein- oder Zweiachsschlepper bereitstellt und einen mechanischen und/oder hydraulischen und/oder elektrischen Energieversorgungsanschluss bereitstellt.
